# EUROPEAN PATENT SPECIFICATION

(11) **EP 3 853 407 B1**
(45) Date of publication and mention of the grant of the patent: **04.11.2026**
(21) Application number: 19863408.1
(22) Date of filing: 20.09.2019
(51) Int. Cl.: C09D 5/02, C09D 7/61, C09D 7/63, C09D 109/08, C08K 3/26

(54) **LATEX COMPOSITIONS**
LATEXZUSAMMENSETZUNGEN
COMPOSITIONS DE LATEX

(30) Priority: 21.09.2018 US 201862734842 P
(43) Date of publication of application: 28.07.2021
(73) Proprietor: Wilana Chemical LLC, Rome, GA 30162-1086 (US)
(72) Inventor: JONES, Dennis, J., Signal Mountain, TN 37377 (US)
(74) Representative: Greenwoods
(86) International application number: PCT/US2019/052255
(87) International publication number: WO 2020/061516

(56) References cited:
- WO-A1-2014/060350
- WO-A1-2018/129159
- GB-A- 1 322 122
- US-A- 5 874 148
- US-A1- 2003 144 400
- US-A1- 2016 340 481

## Description

### RELATED APPLICATION DATA

The present application claims priority pursuant to 35 U.S.C. § 119(e) to United States Patent Application Serial Number 62/734,842 filed September 21, 2018.

### FIELD

The present invention relates to latex compositions and, in particular, to latex compositions comprising an inorganic filler component.

### BACKGROUND

Latex compositions are employed in numerous material applications. Latex compositions, for example, are commonly employed in floor covering applications, such as carpets and rugs. A latex composition is generally applied as a coating on the primary backing of a floor covering. The latex composition locks the floor covering fibers or tufts in place. The latex coating can also serve as an adhesive or substrate for the secondary backing of the floor covering. When used in the floor covering industry, latex compositions include inorganic filler, such as calcium carbonate. Latex compositions having inorganic filler are known to pass liquid spills. To address this deficiency various treatments have been developed for inhibiting liquid penetration of floor covering backings. Fibers of the floor covering, for example, are treated with water repellent compositions, such as fluoropolymers. Fluoropolymers have also found inclusion in the floor covering backing. In some embodiments, fluoropolymer coatings are applied to one or more backing layers. Alternatively, fluoropolymer has been added to the latex coating between the primary and secondary backings. While effective, fluorochemical treatments are less than desirable, given their potential negative environmental impact. US2016/340481A1 discloses a polymer composition comprising an elastomeric polymer, and a zeolite, in which the total amount of the elastomeric polymer and zeolite in the polymer composition is higher than 94 wt %, and the amount of the zeolite component is 20 to 90 wt %. US 5,874,148 discloses a latex composition comprising an elastomer, wax, surfactant and calcium carbonate.

### SUMMARY

In view of these disadvantages, new latex compositions are provided herein exhibiting desirable water repellency characteristics. The latex compositions according to the present invention are as defined in claim 1. Particular embodiments are defined in the dependent claims. Briefly, a latex composition comprises an elastomeric component, a wax component and an inorganic filler component, wherein percent solids of the latex composition is at least 50. In some embodiments, percent solids of the latex composition is 75 to 85. Additionally, the elastomeric component can comprise at least one of a polyisoprene and polymer based on 1,3 dienes.

In one aspect of the present disclosure, latex coatings are described herein. A latex coating comprises an elastomeric component, a wax component and an inorganic filler component, wherein the wax component is present in the coating in an amount of 0.5 to 10 weight percent. In some embodiments, the elastomeric component comprises at least one of a polyisoprene and a polymer based on 1,3 dienes. Moreover, the latex coating, in some embodiments, further comprises a surfactant component. The surfactant component can comprise species having alkoxy moieties in some embodiments.

In another aspect of the present disclosure, coated substrates are described herein. A substrate, for example, comprises a latex coating applied to one or more surfaces of the substrate, the latex coating including an elastomeric component, a wax component and an inorganic filler component, wherein the wax component is present in the latex coating in an amount of 0.5 to 10 weight percent. In some embodiments, the substrate is a backing of a floor covering. In other embodiments, the substrate is a cellulose-based product.

In a further aspect, methods of coating substrates are provided. A method of coating a substrate comprises providing a latex composition comprising an elastomeric component, a wax component and an inorganic filler component, wherein percent solids of the latex composition is at least 50. The latex composition is applied to one or more surfaces of the substrate.

These and other embodiments are described further in the following detailed description.

### DETAILED DESCRIPTION

Embodiments described herein can be understood more readily by reference to the following detailed description and examples and their previous and following descriptions. Elements, apparatus and methods described herein, however, are not limited to the specific embodiments presented in the detailed description and examples. It should be recognized that these embodiments are merely illustrative of the principles of the present invention. Numerous modifications and adaptations will be readily apparent to those of skill in the art without departing from the scope of the invention.

### I. Latex Compositions

In one aspect of the present disclosure, latex compositions are described herein. A latex composition comprises an elastomeric component, a wax component and an inorganic filler component, wherein percent solids of the latex composition is at least 50. In some embodiments, percent solids of the latex composition is 75 to 85.

Turning now to specific components, the elastomeric component can comprise at least one of a polyisoprene (natural rubber, cis-1,4-polyisoprene) and polymer based on 1,3 dienes. For example, the elastomeric component can comprise one or more of styrene-1,3-butdiene (SBR), styrene-1,3-butadiene terpolymer with an unsaturated carboxylic acid (carboxylated SBR), acrylonitrile-1,3-butadiene (NBR or nitrile rubber), isobutylene-isoprene (butyl rubber) and block copolymers of isoprene or 1,3-butadiene with styrene. Polyisoprene and polymers based on 1,3 dienes, for example, can be present in any desired ration. In some embodiments, Polyisoprene and polymer based on 1,3 dienes are present in a 1:3 ratio.

The elastomeric component, according to the present invention, is crosslinked. Crosslinking of the elastomeric component can be achieved with any suitable sulfur crosslinking system.

The latex composition also comprises a wax component. The wax component can comprise one or more waxes having at least one chain of 15 to 60 carbons. In some embodiments, a wax of the wax component comprise at least one chain of 20 to 40 carbons. Waxes of the wax component can also have molecular weight of at least 200 g/mol. In some embodiments, one or more waxes have a molecular weight of 300 to 900 g/mol. One or more waxes can be selected from Table I to compose the wax component, in some embodiments.

**Table I - Waxes**

| |
|---|
| Parrafin Wax |
| Carnuba Wax |
| Candelilla Wax |
| Bee's Wax |

The wax component can be present in the latex composition in any amount consistent with achieving the water repellency objectives herein. The wax component, for example, can be present in an amount of 1 to 20 dry parts per 100 dry parts of the elastomeric component. The wax component in the latex composition according to the present invention is present in an amount of 5 to 15 dry parts per 100 dry parts of the elastomeric component. In some embodiments, the wax component is present in an amount selected from Table II.

**Table II - Wax Component (dry parts/100 dry parts elastomer)**

| |
|---|
| 5-15 |
| 6-12 |
| 2-10 |
| 5-18 |

The latex composition also comprises an inorganic filler component. In some embodiments, the inorganic filler component comprises calcium carbonate, silica, alumina, talc, or clay or various mixtures thereof. The inorganic filler can be present in the latex composition in any desired amount. Inorganic filler, for example, can generally be present in an amount of 200 to 800 dry parts per 100 dry parts of the elastomeric component. In some embodiments, the amount of inorganic filler is selected from Table III.

**Table III - Inorganic Filler (dry parts/100 dry parts elastomer)**

| |
|---|
| 300-700 |
| 300-600 |
| 400-600 |
| 400-500 |

The latex composition may further comprise a surfactant component. The surfactant component can comprise anionic surfactant, cationic surfactant, non-ionic surfactant or various mixtures thereof.
The latex composition according to the present invention comprises one or more anionic surfactants and the surfactant comprises a plurality of alkoxy moieties. For example, the surfactant component can comprise sulfate having a chain including alkoxy moieties. A non-limiting example of such a surfactant is sodium laureth sulfate (SLES). The surfactant can be present in the latex composition in any desired amount. In some embodiments, the surfactant component is present in an amount of 1 to 10 dry parts per 100 dry parts of the elastomeric component. Amount of the surfactant component can also be selected from Table IV.

**Table IV - Surfactant Component (dry parts/100 dry part elastomer)**

| |
|---|
| 3-10 |
| 2-8 |
| 3-5 |
| 1.5-8 |

The latex composition may also comprise silicone resin, in some embodiments. Suitable silicone resin is commercially available from Wacker Chemical AG under the SILRES^{®} MK Powder trade designation.

The latex composition, in some embodiments, exhibits a viscosity of at least 6,000 cps (1 cps = 1 mPa.s). Viscosity of the latex composition can generally range from 8,000 to 10,000 cps in some embodiments. Viscosity of the latex composition can be set according to the specific compositional parameters of the latex. One or more thickeners, for example, can be added to the latex composition to achieve the desired viscosity. In some embodiments, thickener is added to the latex composition in an amount of 1-3 dry parts per 100 dry parts of the elastomeric component. Suitable thickener can be a polymeric material, such as polyacrylic acid, and can generally have 15% solids.

### II. Latex Coatings

In another aspect of the present disclosure, latex coatings are described herein. A latex coating comprises an elastomeric component, a wax component and an inorganic filler component, wherein the wax component is present in the coating in an amount of 0.5 to 10 weight percent. In some embodiments, the wax component is present in the coating in an amount selected from Table V.

**Table V - Wax Component (wt.% in coating)**

| |
|---|
| 1-5 |
| 2-4.5 |
| 2.5-4 |
| 3-6 |

The elastomeric component, wax component and inorganic filler component can comprise any composition and/or properties described in Section I above. In some embodiments, the elastomeric component is present in the coating in an amount of 10 to 20 weight percent or 15 to 20 weight percent. Moreover, the inorganic filler component can be present in the coating in an amount of at least 65 weight percent. In some embodiments, the inorganic filler component is present in an amount of 75 to 90 weight percent.

Latex coatings described herein may further comprise a surfactant component and/or silicone resin. The surfactant component and/or silicone resin can have any composition and/or properties described in Section I above. In some embodiments, the surfactant component is present in the coating in an amount of 0.1 to 1 weight percent. The surfactant may also be present in an amount of 0.3 to 0.7 weight percent.

### III. Coated Substrates

In another aspect of the present disclosure, coated substrates are described herein. A substrate, for example, comprises a latex coating applied to one or more surfaces of the substrate, the latex coating including an elastomeric component, a wax component and an inorganic filler component, wherein the wax component is present in the latex coating in an amount of 0.5 to 10 weight percent. In some embodiments, the substrate is a backing of a floor covering. The substrate, for example, can be a primary backing layer to which the latex coating is applied. In other embodiments, the substrate is a cellulose-based product. Cellulose-based products can include various paper products including, but not limited to, paperboard. Components of the latex coating including the elastomeric component, wax component, inorganic filler component. surfactant component and/or silicone resin component can have any composition and/or properties described in Section I above. Moreover, the latex coating can have any composition and/or properties described in Section II above.

### IV. Methods of Coating Substrates

In a further aspect of the present disclosure, methods of coating substrates are provided. A method of coating a substrate comprises providing a latex composition comprising an elastomeric component, a wax component and an inorganic filler component, wherein percent solids of the latex composition is at least 50. The latex composition is applied to one or more surfaces of the substrate. Components of the latex coating including the elastomeric component, wax component, inorganic filler component, surfactant component and/or silicone resin component can have any composition and/or properties described in Section I above. Moreover, the resultant latex coating can have any composition and/or properties described in Section II above. In some embodiments, a wax emulsion is prepared and blended with an emulsion comprising the elastomeric component and filler.

In some embodiments, the substrate is a backing of a floor covering. The substrate, for example, can be a primary backing layer to which the latex coating is applied. In other embodiments, the substrate is a cellulose-based product. Cellulose-based products can include various paper products including, but not limited to, paperboard.

These and other embodiments are further illustrated by the following non-limiting examples.

### EXAMPLE 1 - Latex Composition (not according to the present invention)

A latex composition was prepared as follows. An emulsion comprising the elastomeric component and inorganic filler component was prepared according to Table VI.

**Table VI - Elastomeric Emulsion**

| Component | Amount (dry parts) |
|---|---|
| SBR Latex | 100 |
| CaCO₃ filler | 600 |
| Sulfate surfactant (ALS) | 0.5-1 |
| Thickener (PAA) | 1.5 |
| Water | To meet solids target |
| Solids Target | 80% |
| Frothed Viscosity Target | 12,000-14,000 cps |

A wax emulsion was prepared comprising a wax component of 5 to 15 dry parts per 100 dry parts of elastomer in the elastomeric emulsion. As provided below, the wax component was selected from the group consisting of paraffin wax, carnauba wax, candelilla wax, and bee's wax. Various species can be employed to further stabilize the wax emulsion, such as steric acid and triethanolamine. The wax emulsion was subsequently blended with the elastomeric emulsion to provide the final latex composition. The solid target for the final latex composition was 78-82%.

### EXAMPLE 2 - Substrates Coated with Latex Compositions

Four latex compositions were prepared according to Example 1. A different wax component was employed in each composition as set forth in Table VII. Composition of the elastomeric emulsion remained constant according to Table VI.

**Table VII - Wax Emulsion**

| Sample | Wax Component | Amount (dry parts/100 dry parts elastomer) |
|---|---|---|
| 1 | Paraffin Wax | 10 |
| 2 | Carnauba Wax | 15 |
| 3 | Candelilla Wax | 10 |
| 4 | Bee's Wax | 15 |

Each of the four latex emulsions was individually applied to the backing of a carpet sample. Carpet samples employed in the present example exhibited the composition and properties set forth in Table VIII.

**Table VIII - Carpet Sample Properties**

| |
|---|
| Ascend Type 6,6 Nylon 1400 denier filament |
| 2 ply twist/suessen heat set |
| 45 oz/yd², 1/8 gauge shifted construction |
| Solid color cut pile |
| Continuously dyed into medium gray color |
| Continuously treated with stain and soil resist chemistry for pile fibers |

No fluorochemical treatments were applied to the carpet samples.

Liquid repellencies of the carpet samples coated with the latex compositions were then tested by spilling 20 mL of water on each sample. A pass rating was achieved if the water did not penetrate past the latex coating layer within a 24-hour timeframe. The results are provided in Table IX.

**Table IX - Water Repellency Results**

| Sample | Wax Component | Test Result |
|---|---|---|
| 1 | Paraffin Wax | Pass |
| 2 | Carnauba Wax | Pass |
| 3 | Candelilla Wax | Pass |
| 4 | Bee's Wax | Pass |

As set forth in Table IX, each of the carpet samples employing the latex coating exhibited desired water repellency in the absence of any fluorochemical treatment.

### EXAMPLE 3 - Substrates Coated with Latex Compositions

A latex composition was prepared in accordance with Sample 1 in Example 2 employing paraffin wax. The paraffin wax was present in the latex composition in an amount of 6.9 dry parts per 100 dry parts of the elastomeric component. A silicon resin (SILRES^{®} MK) was also added to the latex composition in an amount of 1.35 dry parts per 100 dry parts of the elastomeric component. Three control latex composition were also provided. The control latex compositions exhibited the compositional parameters of Table VI. The control compositions also comprised SILRES^{®} MK in amounts provided in Table X.

**Table X - SILRES^{®} MK Amount**

| Control Sample | Amount (dry parts/100 dry parts elastomer) |
|---|---|
| 1 | 5 |
| 2 | 7.5 |
| 3 | 10 |

The latex compositions were applied to carpet samples as set forth in Example 2 and tested for water repellency according to Example 2. The results are provided in Table XI.

**Table XI - Water Repellency Results**

| Sample | Result |
|---|---|
| 1 (Paraffin Wax) | Pass |
| Control 1 | Fail |
| Control 2 | Fail |
| Control 3 | Fail |

The results of the water repellency testing established a synergistic relationship between the wax component and silicone resin. In the control samples, Silicone resin alone was unable to impart water repellency to the latex composition. When combined with the wax component, however, the latex composition exhibited the desired water repellency with a reduction in the amount of wax component.

### EXAMPLE 4 - Substrates Coated with Latex Compositions (not according to the present invention)

A latex composition was prepared in accordance with Sample 1 in Example 2 employing paraffin wax. The paraffin wax was present in the latex composition in an amount of 5 dry parts per 100 dry parts of the elastomeric component. Additionally, the elastomeric component of Table VI was crosslinked via a crosslinking package employing sulfur, zinc oxide, zinc diethyldithiocarbamate, and tetrasodium pyrophosphate (TSPP). Control latex compositions were also provided. Control latex 1 had the compositional parameters of Table VI. Control latex 2 also had the compositional parameters of Table VI. The elastomeric component of control latex 2 was crosslinked with the same crosslinking package as the latex composition comprising 5 dry part of paraffin wax. The latex compositions were applied to carpet samples as set forth in Example 2 and tested for water repellency according to Example 2. The results are provided in Table XII.

**Table XII - Water Repellency Results**

| Sample | Amount of Water Passing through Latex Coating (grams) | Result |
|---|---|---|
| 1 (Paraffin Wax) | 0 | Pass |
| Control 1 | 9.4 | Fail |
| Control 2 | 2.1 | Fail |

While crosslinking the elastomeric component improved water repellency, it did not preclude water passing through the latex composition. Presence of the wax component was still required for the desired water repellency.

### EXAMPLE 5 - Substrates Coated with Latex Compositions (not according to the present invention)

Elastomeric emulsions were prepared according to Tables XIII and XIV.

**Table XIII - Elastomeric Emulsion**

| Component | Amount (dry parts) |
|---|---|
| SBR Latex | 100 |
| CaCO₃ filler | 500 |
| Sodium Laurel Sulfate (SLS) | 3-4 |
| Thickener (PAA) | 1.5 |
| Water | To meet solids target |
| Solids Target | 80% |
| Frothed Viscosity Target | 20,000-22,000 cps |

**Table XIV - Elastomeric Emulsion**

| Component | Amount (dry parts) |
|---|---|
| SBR Latex | 75 |
| Natural Rubber Latex | 25 |
| CaCO₃ filler | 500 |
| Sodium Laureth Sulfate (SLES) | 3-4 |
| Thickener (PAA) | 1.5 |
| Water | To meet solids target |
| Solids Target | 80% |
| Frothed Viscosity Target | 20,000-22,000 cps |

The elastomeric emulsions of Tables XIII and XIV were each combined with a wax emulsion comprising 15 dry parts paraffin wax per 100 parts elastomer component. The resulting latex compositions (Sample 1 based on Table XIII and Sample 2 based on Table XIV) were applied to the backing of carpet samples. The carpet samples each had the properties in Table XV.

**Table XV - Carpet Sample Properties**

| |
|---|
| Type 6 Nylon 2000 denier filament |
| 2 ply twist/superba heat set |
| 28 oz/yd², 1/8 gauge straight construction |
| Multi colored loop pile |
| Continuously treated with stain and soil resist chemistry for pile fibers |

The latex coated carpet samples were subsequently subjected to the British Spill Test. In the British Spill Test, a 100 mL volume of methylene blue dye solution is poured onto the center of the carpet from a height of 1 meter. The amount of methylene blue dye solution passing through the samples is determined visually after 2 minutes and after 24 hours. The results are graded on a 1-10 scale, with 10 being no stain and 1 being heavily stained. Table XVI provided the results for the carpet samples coated with the latex coatings of Sample 1 and Sample 2.

**Table XVI - British Spill Test Results**

| Sample | Spill Rating |
|---|---|
| 1 | 1 |
| 2 | 10 |

Sample 2 comprising the SLES surfactant provided significantly better results.

### EXAMPLE 6 - Substrates Coated with Latex Compositions

The testing of Example 5 was repeated. However, in the present example, the elastomeric components were crosslinked with the crosslinking package of Example 4. The remaining parameters were held constant. The results of the British Spill Test are provided in Table XVII. Sample 1 is not according to the present invention.

**Table XVI - British Spill Test Results**

| Sample | Spill Rating |
|---|---|
| 1 | 2 |
| 2 | 10 |

The crosslinking provided minimal improvement to Sample 1. Statistical analysis of the data revealed that the ethoxylated surfactant (SLES) was primarily responsible for the dramatic differences in spill test performance between Samples 1 and 2. While not wishing to be bound by any theory, physical observation of the latex coating of Sample 1 exhibited small defects or pores through which the methylene blue solution passed. Formation of these pores may be attributed to the SLS surfactant. These defects or pores were not present in Sample 2 where the ethoxylated surfactant (SLES) was employed.

Various embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the scope of the invention.

## Claims

1. A latex composition comprising:
an elastomeric component, a wax component, a surfactant component, and an inorganic filler component, wherein percent solids of the latex composition is at least 50, and wherein
the wax component is present in an amount of 5 to 15 dry parts per 100 dry parts of the elastomeric component;
the elastomeric component is crosslinked;
the surfactant component comprises one or more anionic surfactants; and
the surfactant comprises a plurality of alkoxy moieties.

2. The latex composition of claim 1, wherein the elastomeric component comprises at least one of a polyisoprene and polymer based on 1,3 dienes.

3. The latex composition of claim 1, wherein the wax component comprises one or more waxes comprising at least one chain of 15 to 60 carbons.

4. The latex composition of claim 1, wherein the wax component comprises one or more waxes having molecular weight of at least 200 g/mol.

5. The latex composition of claim 1, wherein the inorganic filler component comprises calcium carbonate.

6. The latex composition of claim 1, wherein the percent solids is 75 to 85.

7. The latex composition of claim 1, wherein the wax component is present in an amount of 6 to 12 dry parts per 100 dry parts of the elastomeric component.

8. The latex composition of claim 1, wherein the inorganic filler component is present in an amount of 200 to 800 dry parts per 100 dry parts of the elastomeric component.

9. The latex composition of claim 1, wherein the surfactant component comprises sodium laureth sulfate.

10. The latex composition of claim 1, wherein the surfactant component is present in an amount of 1 to 10 dry parts per 100 dry parts of the elastomeric component.

11. The latex composition of claim 1 further comprising a methyl silicone resin.

12. The latex composition of claim 1, wherein the elastomeric component is free from any fluorochemicals.

## Patentansprüche

1. Eine Latexzusammensetzung, die besteht:
eine elastomere Komponente, eine Wachskomponente, eine Tensidkomponente, und eine anorganische Füllstoffkomponente, bei der der Anteil der Feststoffe der Latexzusammensetzung mindestens 50 beträgt und in der
Die Wachskomponente ist in einer Menge von 5 bis 15 trockenen Teilen pro 100 trockenen Teilen der elastomeren Komponente vorhanden;
die elastomere Komponente ist vernetzt;
Die Tensidkomponente besteht aus einem oder mehreren anionischen Tensidenten; und
Das Tensid besteht aus einer Vielzahl von Alkoxy-Hälften.

2. Die Latexzusammensetzung von Anspruch 1, wobei die elastomere Komponente mindestens aus einem Polyisopren und einem Polymer besteht, das auf 1,3 Dienen basiert.

3. Die Latexzusammensetzung von Anspruch 1, bei der die Wachskomponente aus einem oder mehreren Wachsen besteht, die mindestens eine Kette von 15 bis 60 Kohlenstoffen enthalten.

4. Die Latexzusammensetzung von Anspruch 1, bei der die Wachskomponente aus einem oder mehreren Wachsen mit einem Molekulargewicht von mindestens 200 g/mol besteht.

5. Die Latexzusammensetzung von Anspruch 1, bei der die anorganische Füllstoffkomponente aus Calciumcarbonat besteht.

6. Die Latexzusammensetzung von Anspruch 1, wobei der Prozentsatz der Feststoffe 75 bis 85 beträgt.

7. Die Latexzusammensetzung von Anspruch 1, bei der der Wachsbestandteil in einer Menge von 6 bis 12 vorliegt trockene Teile pro 100 trockene Teile der elastomeren Komponente.

8. Die Latexzusammensetzung von Anspruch 1, bei der die anorganische Füllkomponente in einer Menge von 200 bis 800 trockenen Teilen pro 100 trockenen Teile der elastomeren Komponente vorhanden ist.

9. Die Latexzusammensetzung von Anspruch 1, wobei der Tensidbestandteil aus Natriumlaurethsulfat besteht.

10. Die Latexzusammensetzung von Anspruch 1, bei der die Tensidkomponente in einer Menge von 1 bis 10 trockenen Teilen pro 100 trockene Teile der elastomeren Komponente vorhanden ist.

11. Die Latex-Zusammensetzung des Anspruchs 1 besteht weiter aus einem Methylsilikonharz.

12. Die Latexzusammensetzung von Anspruch 1, bei der die elastomere Komponente frei von Fluorchemikalien ist.

## Revendications

1. Une composition en latex comprenant :
un composant élastomère, un composant cire, un composant tensioactif, et un composant de remplissage inorganique, où le pourcentage de solides de la composition latex est au moins 50, et où
La composante cire est présente dans une quantité de 5 à 15 parties sèches pour 100 parties sèches de la composante élastomérique ;
la composante élastomérique est réticulée ;
La composante tensioactif comprend un ou plusieurs tensioactifs anioniques ; et
Le tensioactif comprend une pluralité de moitiés alkoxy.

2. La composition en latex de la revendication 1, où la composante élastomérique comprend au moins un polyisoprène et un polymère à base de 1,3 diènes.

3. La composition latex de l'affirmation 1, où la composante cire comprend une ou plusieurs cires comprenant au moins une chaîne de 15 à 60 carbones.

4. La composition latex de la revendication 1, où la composante cire comprend une ou plusieurs cires ayant un poids moléculaire d'au moins 200 g/mol.

5. La composition du latex de la revendication 1, où le composant inorganique de remplissage est constitué de carbonate de calcium.

6. La composition latex de l'affirmation 1, où le pourcentage de solides est de 75 à 85.

7. La composition latex de la revendication 1, où la composante cire est présente en une quantité de 6 à 12 des parties sèches pour 100 parties sèches de la composante élastomérique.

8. La composition latex de la revendication 1, où le composant de remplissage inorganique est présent en une quantité de 200 à 800 parties sèches pour 100 parties sèches de la composante élastomérique.

9. La composition du latex de la revendication 1, où le composant tensioactif est constitué du sulfate de laureth de sodium.

10. La composition latex de la revendication 1, où la composante tensioactif est présente dans une quantité de 1 à 10 parties sèches pour 100 parties sèches de la composante élastomérique.

11. La composition latex de la revendication 1 comprenant en outre une résine de silicone méthylique.

12. La composition du latex de la revendication 1, où la composante élastomérique est exempte de tout fluorochimique.
